# EUROPÄISCHE PATENTSCHRIFT

(11) **EP 3 077 361 B1**
(45) Veröffentlichungstag und Bekanntmachung des Hinweises auf die Patenterteilung: **12.06.2019**
(21) Anmeldenummer: 14795958.9
(22) Anmeldetag: 07.11.2014
(51) Int. Cl.: C08K 5/12

(54) **VERWENDUNG VON CYCLOHEXANCARBOXYLSÄUREDERIVATEN ALS WEICHMACHER**
USE OF CYCLOHEXANOIC ACID DERIVATIVES AS PLASTICIZERS
UTILISATION DE DÉRIVÉS D'ACIDE CYCLOHEXANECARBOXYLIQUE COMME PLASTIFIANTS

(30) Priorität: 06.12.2013 DE 102013020133
(43) Veröffentlichungstag der Anmeldung: 12.10.2016
(73) Patentinhaber: Rudolph, Thomas, 4310 Rheinfelden (CH)
(72) Erfinder: RUDOLPH, Thomas, 64291 Darmstadt (DE); EISENBERG, Sylvia, 64646 Heppenheim (DE)
(86) Internationale Anmeldenummer: PCT/EP2014/002988
(87) Internationale Veröffentlichungsnummer: WO 2015/082034

(56) Entgegenhaltungen:
- EP-A1- 1 403 322
- WO-A2-2013/091775

## Beschreibung

Die vorliegende Erfindung betrifft die Verwendung mindestens eines Cyclohexancarboxylsäurederivats der Formel Ia oder Ib als Weichmacher.

Weichmacher sind Stoffe, die spröden Materialien (meist Kunststoffen oder Elastomeren) zugesetzt werden, um sie weich, biegsam oder dehnbar zu machen, damit sie einfacher zu bearbeiten sind oder bestimmte Gebrauchseigenschaften erreichen. Sie sind in großen Mengen in Kunststoffen (z.B. PVC), Lacken, Anstrich- und Beschichtungsmitteln, Dichtungsmassen, Kautschuk- und Gummi-Artikeln sowie in Klebstoffen enthalten. Als Weichmacher werden sehr unterschiedliche Stoffe eingesetzt. Dabei finden insbesondere Phthalsäureester Anwendung, wie beispielsweise Di-2-ethylhexylphthalat (DEHP), Diisononylphthalat (DINP) oder Diisodecylphthalat (DIDP). Mit zunehmender Kettenlänge der Ester steigen Löse- bzw. Geliertemperaturen und somit die Verarbeitungstemperaturen des PVC an. Die Verarbeitungstemperaturen können durch Zusatz von sogenannten Schnellgelierern wie die kurzkettigen Phthalate Dibutylphthalat (DBP), Diisobutylphthalat (DIBP), Benzylbutylphthalat (BBP) oder Diisoheptylphthalat (DIHP) wieder reduziert werden.

Phthalatweichmacher wie z.B. DEHP sind auf Grund ihrer aromatischen Struktur und der damit verbundenen sexualhormonähnlichen Wirkung sehr umstritten.Reproduktionstoxische und ökotoxische Phthalateffekte führen zu Negativbewertungen insbesondere bei Verwendungen in Applikationen, die eng mit dem menschlichen Körper in Verbindung stehen: Weichmacher können aus den Materialien austreten und dabei in die Umwelt sowie in die Nahrungskette gelangen, was in einigen Fällen bereits zu einer verstärkten gefahrstoffrechtlichen Kennzeichnungspflicht geführt hat. Aus diesen Gründen ist damit zu rechnen, dass auch in Zukunft die Verwendung von Phthalaten weiter eingeschränkt wird.

Daher besteht derzeit ein zunehmender Bedarf an Weichmachern, insbesondere an sog. Schnellgelierern, die toxikologisch und ökotoxikologisch unbedenklich sind und zudem in großen Mengen verfügbar gemacht werden können.

Im Stand der Technik werden von Cyclohexanol abgeleitete Weichmacher beschrieben:
WO 02/102914 A1 beschreibt Cyclohexanol als möglichen Weichmacher für Klebstoffe.

Die Verwendung von alicyclischen Alkoholestern wie Dimethylcyclohexyladipat oder Dimethylcyclohexylsebacat u.a. als Weichmacher wird in Michael et al. (1956, Industrial and Engineering Chemistry, Vol. 1, No. 1, Seite 118-121) beschrieben.

Weiterhin beschreibt WO 2009/085453 A2 die Verwendung von Cyclohexancarboxylsäureestern als Weichmacher.

EP 1403322 A1 offenbart Weichmacher auf Basis cyclischer Carbonsäureester. Es werden keine spezifischen Beispiele von 4-Hydroxy-Cyclohexan-Carbonsäureestern offenbart.

WO 2013/091775 A2 offenbart bestimmte Cyclohexancarboxylsäureester mit antimikrobiellen Eigenschaften.

Ziel der vorliegenden Erfindung war die Bereitstellung alternativer Weichmacher.

Überraschend wurde nun gefunden, dass sich bestimmte Cyclohexancarboxylsäureester als Weichmacher eignen.

Ein erster Gegenstand der vorliegenden Erfindung ist daher die Verwendung mindestens einer Verbindung der Formel Ia oder Ib 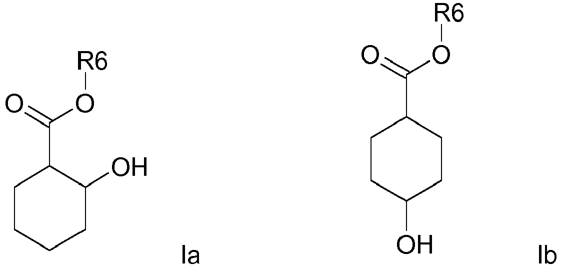 worin R6 steht für einen Rest ausgewählt aus
- H,
- (CR7H-CR8H-O)ₙCR9H-CR10H-OH, mit n= 0 bis 20,
- geradkettige oder verzweigten Alkylgruppe mit 1 bis 20 C-Atomen,
- geradkettige oder verzweigte Alkenyl- oder Alkinylgruppe mit 2 bis 20 C-Atomen und einer oder mehreren Doppel- bzw. Dreifachbindungen,
wobei die Alkyl-, Alkenyl- oder Alkinylgruppe optional eine oder mehrere Cyclohexyl- oder Arylgruppen enthalten kann
und worin R7, R8, R9 und R10 unabhängig voneinander stehen für H, Methyl oder Ethyl, als Weichmacher.

Erfindungsgemäß werden von den Verbindungen der Formeln Ia und Ib alle möglichen Ringkonfigurationsisomere umfasst, d.h. sowohl cis-, als auch trans-Isomere sind denkbar.

Ebenso ist für den Fachmann bekannt, dass die Atome der Verbindungen auch durch andere Isotope ersetzt sein können, so ist zum Beispiel ein Austausch der H-Atome durch D möglich.

Bei den erfindungsgemäßen Verbindungen der Formeln Ia und Ib handelt es sich um Nicht-Phthalat-Weichmacher. Die erfindungsgemäßen Weichmacher bewirken eine gute Gelierung. Je nach Verwendungszweck können geeignete erfindungsgemäße Weichmacher aus den Verbindungen der Formel Ia und Ib ausgewählt werden. Weiterhin vorteilhaft ist, dass die erfindungsgemäßen Weichmacher als Ersatz für die oben genannten Phthalate eingesetzt werden können, da mit ihnen vergleichbare mechanische Eigenschaften erzielt werden können. Da die Verbindungen der Formel Ia und Ib auf Cyclohexanol und nicht auf Phthalsäure basieren, sind sie nicht toxisch und gleichzeitig gut biologisch abbaubar.Weiterhin verfügen erfindungsgemäße Weichmacher zudem über den Vorteil, antimikrobiell wirksam zu sein. Sie können Zubereitungen vor mikrobieller Kontamination schützen (siehe WO 2013/091775 A2).

Beispiele für solche Verbindungen sind im Folgenden aufgelistet:

| | | | |
|---|---|---|---|
| I-1 | 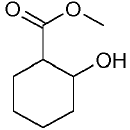 | I-2 | 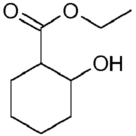 |
| I-3 | 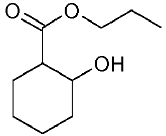 | I-4 | 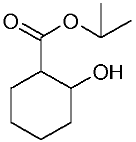 |
| I-5 | 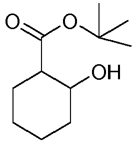 | I-6 | 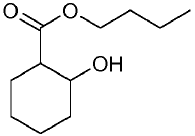 |
| I-7 | 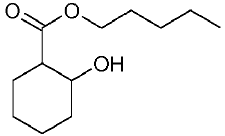 | I-8 | 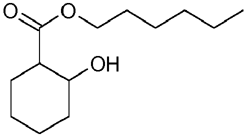 |
| I-9 | 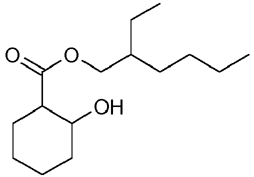 | I-10 | 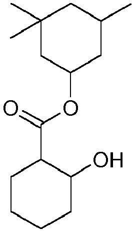 |
| I-11 | 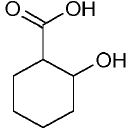 | I-12 | 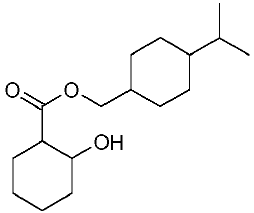 |
| I-13 | 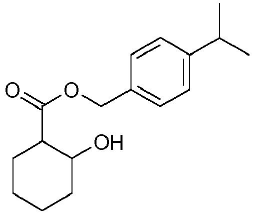 | I-14 | 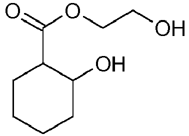 |
| I-15 | 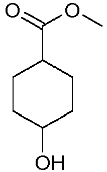 | I-16 | 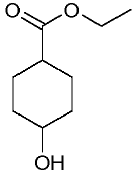 |
| I-17 | 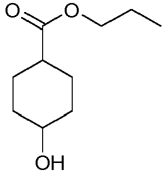 | I-18 | 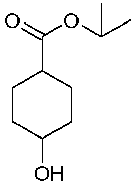 |
| I-19 | 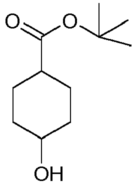 | I-20 | 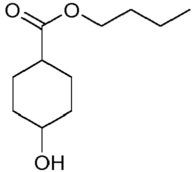 |
| I-21 | 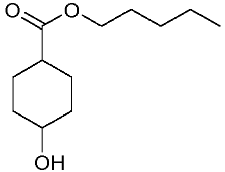 | I-22 | 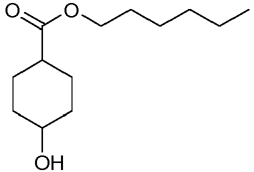 |
| I-23 | 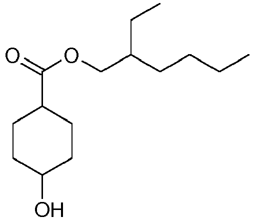 | I-24 | 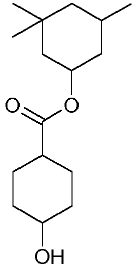 |
| I-25 | 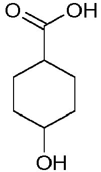 | I-26 | 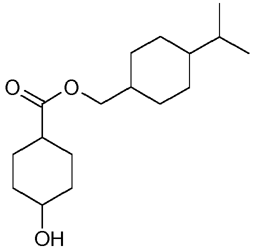 |
| I-27 | 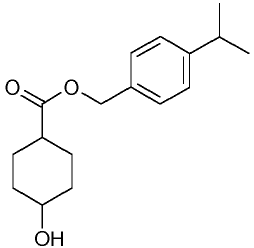 | I-28 | 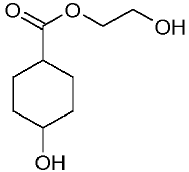 |

R6 steht in Formel Ia und Ib erfindungsgemäß bevorzugt für einen Rest ausgewählt aus
- H,
- CH₂CH₂OH,
- geradkettige oder verzweigten Alkylgruppe mit 1 bis 20 C-Atomen, welche optional eine oder mehrere Cyclohexyl- oder Arylgruppen enthalten kann.

Alternativ steht R6 in den Verbindungen der Formel Ia und Ib bevorzugt für
- (CR7H-CR8H-O)ₙCR9H-CR10H-OH, mit n= 1 bis 20,
- geradkettige oder verzweigten Alkylgruppe mit 4 bis 20 C-Atomen,
- geradkettige oder verzweigte Alkenyl- oder Alkinylgruppe mit 4 bis 20 C-Atomen und einer oder mehreren Doppel- bzw. Dreifachbindungen,
wobei die Alkyl-, Alkenyl- oder Alkinylgruppe optional eine oder mehrere Cyclohexyl- oder Arylgruppen enthalten kann,
und worin R7, R8, R9 und R10 unabhängig voneinander stehen für H, Methyl oder Ethyl.

Besonders bevorzugt ist die Verbindung der Formel Ia oder Ib ausgewählt aus den Verbindungen der Formel I-1 bis I-28

| | | | |
|---|---|---|---|
| I-1 | 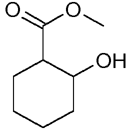 | I-2 | 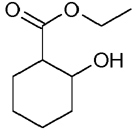 |
| I-3 | 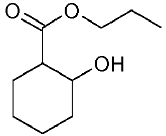 | I-4 | 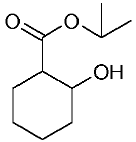 |
| I-5 | 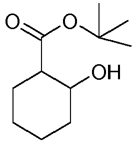 | I-6 | 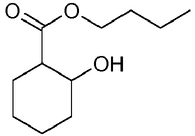 |
| I-7 | 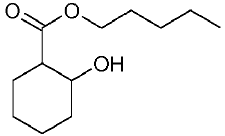 | I-8 | 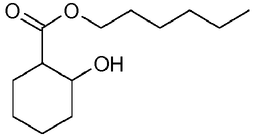 |
| I-9 | 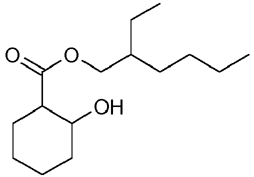 | I-10 | 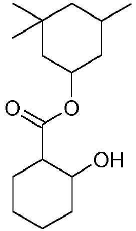 |
| I-11 | 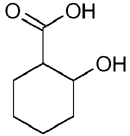 | I-12 | 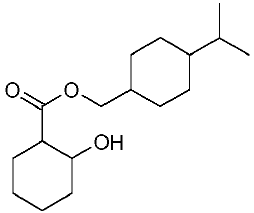 |
| I-13 | 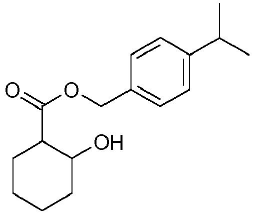 | I-14 | 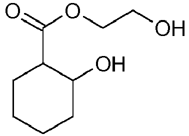 |
| I-15 | 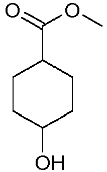 | I-16 | 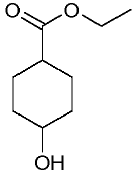 |
| I-17 | 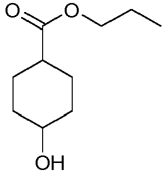 | I-18 | 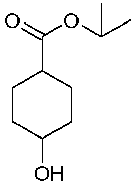 |
| I-19 | 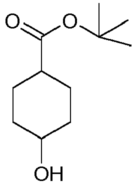 | I-20 | 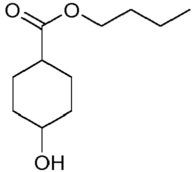 |
| I-21 | 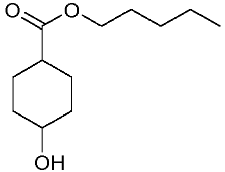 | I-22 | 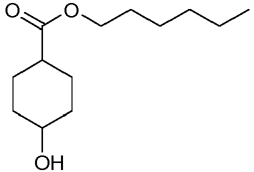 |
| I-23 | 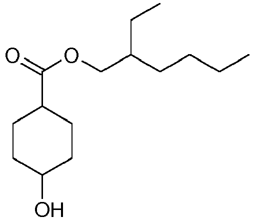 | I-24 | 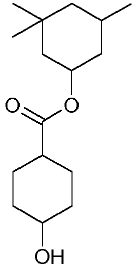 |
| I-25 | 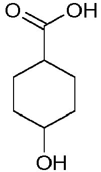 | I-26 | 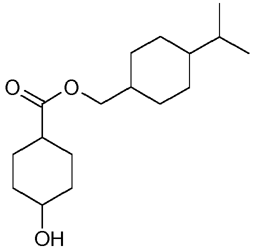 |
| I-27 | 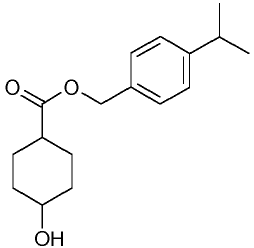 | I-28 | 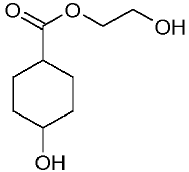 |

Ganz besonders bevorzugt sind die Verbindungen der Formel I-9, I-10 und I-20.

Im Sinne der vorliegenden Erfindung handelt es sich bei einer geradkettigen oder verzweigten C₁- bis C₁₀-Alkylgruppe um einen Alkylrest mit 1 bis 10 C-Atomen, beispielsweise um Methyl, Ethyl, Isopropyl, Propyl, Butyl, sek.-Butyl oder tert.-Butyl, Pentyl, Isopentyl, 1-, 2- oder 3-Methylbutyl, 1,1-, 1,2- oder 2,2-Dimethylpropyl, 1-Ethylpropyl, 1-Ethyl-1-methylpropyl, 1-Ethyl-2-methylpropyl, 1,1,2- oder 1,2,2-Trimethylpropyl, 1,1-, 1,2-, 1,3-, 2,2-, 2,3- oder 3,3-Dimethylbutyl, 1- oder 2-Ethylbutyl, 1-, 2-, 3- oder 4-Methylpentyl, Hexyl, Heptyl, 1-Ethyl-pentyl, Octyl, 1-Ethyl-hexyl, Nonyl oder Decyl.

Bei einer C₁- bis C₂₀-Alkylgruppe kann es sich neben den oben gelisteten Resten beispielsweise auch um Undecyl, Dodecyl, Tridecyl, Tetradecyl, Pentadecyl, Hexadecyl, Heptadecyl, Octadecyl, Nonadecyl oder Eicosyl handeln.

Erfindungsgemäß kann eine Alkenylgruppe eine oder mehrere Doppelbindungen enthalten. Eine geradkettige oder verzweigte C₂- bis C₂₀-Alkenylgruppe ist beispielsweise Allyl, Vinyl, Propenyl, 2- oder 3-Butenyl, Isobutenyl, sek.-Butenyl, 2-Methyl-1- oder 2-Butenyl, 3-Methyl-1-butenyl, 1,3-Butadienyl, 2-Methyl-1,3-butadienyl, 2,3-Dimethyl-1,3-butadienyl, 1-, 2-, 3- oder 4-Pentenyl, iso-Pentenyl, Hexenyl, Heptenyl oder Octenyl, -C₉H₁₇,-C₁₀H₁₉ bis -C₂₀H₃₉.

Eine Alkinylgruppe kann eine oder mehrere Dreifachbindungen enthalten. Beispiele für eine verzweigte oder nicht verzweigte C₂- bis C₂₀-Alkinylgruppe sind Ethinyl, 1- oder 2-Propinyl, 2- oder 3-Butinyl, ferner 4-Pentinyl, 3-Pentinyl, Hexinyl, Heptinyl, Octinyl, -C₉H₁₅, -C₁₀H₁₇ bis -C₂₀H₃₇.

Eine Cyclohexylgruppe bezeichnet im Sinne der Erfindung eine gesättigte C6-Cycloalkylgruppe.

Eine Arylgruppe bezeichnet im Sinne der vorliegenden Erfindung eine vollständig ungesättigte (d.h. aromatische) cyclische
Kohlenwasserstoffgruppe, die 3 bis 12 C-Atome umfassen kann, bevorzugt Phenyl.

Die Bindung an den jeweiligen Rest kann über jedes Ringmitglied der Cyclohexyl- oder Arylgruppe erfolgen.

Erfindungsgemäß wird unter einer Alkyl-, Alkenyl- oder Alkinylgruppe, welche optional eine oder mehrere Cyclohexyl- oder Arylgruppen enthalten kann verstanden, dass die geradkettige oder verzweigte Alkyl-, Alkenyl- oder Alkinylgruppe optional durch eine oder mehrere Cyclohexylgruppen unterbrochen oder substituiert sein kann. Die Zahl der C-Atome der Cyclohexyl- und/ oder Arylgruppen ist dabei Teil der Gesamtsumme der C-Atome wie oben definiert.

Die Verbindungen der Formel Ia und Ib können mittels Hydrierung entsprechender aromatische Ausgangsprodukte nach dem Fachmann bekannten Methoden mit Wasserstoff und unter Verwendung eines geeigneten Ni-, Co-, Pt-, Pd- oder Rh-Katalysators hergestellt werden. (siehe beispielsweise GB 286201, Beispiel 3).

Die Edukte, sowie die weiteren notwendigen Stoffe in der Synthese sind kommerziell erhältlich oder durch Synthesen zugänglich, die dem Fachmann aus der Literatur bekannt sind. Dabei bereitet es dem Fachmann keine Schwierigkeiten, die geeigneten Reaktionsbedingungen wie Lösungsmittel oder Temperatur auszuwählen.

Typischerweise erfolgt die Reaktion bei Temperaturen unter 100°C und einem Druck kleiner 200 bar, z.B. bei 100 bar oder 5 bar.

Beispiele für mögliche Lösungsmittel sind 2-Propanol oder Tetrahydrofuran. Die Reaktionszeit beträgt typischerweise mehrere Stunden, beispielsweise 3 bis 5 Stunden.

Alternativ kann die Hydrierung auch mittels dem in WO 2011/001041 A1 beschriebenen Verfahren durchgeführt werden.

Ein Weichmacher kann neben der mindestens einen Verbindung der Formel Ia oder Ib, wie zuvor definiert, weitere Weichmacher enthalten. Dabei kann es sich um primäre Weichmacher (auch Primärweichmacher) oder um sekundäre Weichmacher (auch Sekundärweichmacher) handeln.

Unter primären Weichmachern werden solche Verbindungen verstanden, die als alleinige Weichmacher eingesetzt werden können und in weiten Konzentrationsbereichen (wenige Prozent, z.B. 10 Gew.-% bis hin zu Verhältnissen mit anteilig mehr Weichmacher als Polymer) mit dem weichzumachenden Polymer verträglich sind. Durch das Vorhandensein von primären Weichmachern können die Eigenschaften des erfindungsgemäßen Weichmachers variiert werden.

Unter den sekundären Weichmachern werden Weichmacher verstanden, die mäßige Geliereigenschaften haben und zusammen mit Primärweichmachern eingesetzt werden. Sie dienen beispielsweise zur Verbesserung der Verarbeitung der Kunststoffmasse.

In der Kombination mit weiteren Weichmachern können die Verbindungen der Formel Ia oder Ib primäre oder sekundäre Weichmacherfunktionen ausüben.

Vorzugsweise weist ein Weichmacher neben den Verbindungen der Formel Ia oder Ib eine weitere Weichmachersubstanz auf.

Diese kann beispielsweise ausgewählt sein aus der Gruppe der Alkylester, der aromatischen Polycarbonsäuren, der Cyclohexanpolycarbonsäuren, der Benzoesäure und/ oder der Adipinsäure. Weitere Beispiele sind Phthalsäuredialkylester (bevorzugt mit 4 bis 13 C-Atomen in der Alkylkette), Trimellitsäuretrialkylester (bevorzugt mit 4 bis 10 C-Atomen in der Seitenkette), Adipinsäuredialkylester und Terephthalsäuredialkylester (jeweils bevorzugt mit 4 bis 10 C-Atomen in der Seitenkette), 1,2-Cyclohexandisäurealkylester, 1,3-Cyclohexandisäurealkylester und 1,4-Cyclohexandisäurealkylester (jeweils bevorzugt mit Alkyl = Alkylrest mit 4 bis 10 Kohlenstoffatomen in der Seitenkette), Dibenzoesäureester von Glykolen (bevorzugt mit Di- oder Triethylenglycol oder Di- oder Tripropylenglycol), Alkylsulfonsäureester von Phenol (mit Alkyl = Alkylrest mit 8 bis 22 Kohlenstoffatomen), sowie acylierte und nicht acylierte Citronensäuretrialkylester, Polymerweichmacher, Glycerinester und Benzoesäurealkylester (bevorzugt mit 7 bis 13 C-Atomen in der Alkylkette). In allen Fällen können die Alkylreste geradkettig oder verzweigt, sowie gleich oder verschieden sein.

Der Anteil an den Verbindungen der Formel Ia oder Ib in einem Gemisch mit anderen Weichmachern beträgt dabei vorzugsweise 10 bis 90 Gew.%, besonders bevorzugt 20 bis 80 Gew.%, ganz besonders bevorzugt 30 bis 70 Gew.%, wobei sich die Massenanteile aller vorhandener Weichmacher zu 100 % addieren.

Ein weiterer Gegenstand der vorliegenden Erfindung ist die Verwendung einer Verbindung wie zuvor beschrieben in einer Zusammensetzung enthaltend mindestens eine Verbindung der Formel Ia oder Ib wie zuvor beschrieben, sowie ein Polymer.

Das Polymer kann erfindungsgemäß beispielsweise ausgewählt sein aus Polyvinylchlorid (PVC), Polyvinylidenchlorid (PVDC), Polyacrylaten, insbesondere Polymethylmethacrylat (PMMA), Polyalkylmethacrylat (PAMA), Fluorpolymeren, insbesondere Polyvinylidenfluorid (PVDF), Polytetrafluorethylen (PTFE), Polyvinylacetat (PVAc), Polyvinylalkohol (PVA), Polyvinylacetale, insbesondere Polyvinylbutyral (PVB), Polystyrolpolymere, insbesondere Polystyrol (PS), Expandierbares Polystyrol (EPS), Acrylonitril-Styrol-Acrylat (ASA), Styrolacrylonitril (SAN), Acrylonitril- Butadien-Styrol (ABS), Styrol-Maleinsäureanhydrid-Copolymer (SMA), Styrol- Methacrylsäure-Copolymer, Polyolefine, insbesondere Polyethylen (PE) oder Polypropylen (PP), thermoplastische Polyolefine (TPO), Polyethylen-Vinylacetat (EVA), Polycarbonate, Polyethylenterephthalat (PET), Polybutylenterephthalat (PBT), Polyoxymethylen (POM), Polyamid (PA), Polyethylenglykol (PEG), Polyurethan (PU), Thermoplastisches Polyurethan (TPU), Polysulfide (PSu), Biopolymere, insbesondere Polymilchsäure (PLA), Polyhydroxylbuttersäure (PHB), Polyhydroxylvaleriansäure (PHV), Polyester, Stärke, Cellulose und Cellulose- Derivate, insbesondere Nitrocellulose (NC), Ethylcellulose (EC), Celluloseacetat (CA), CelluloseAcetat/Butyrat (CAB), Gummi oder Silikone, sowie Mischungen oder Copolymere der genannten Polymere oder deren monomeren Einheiten. Vorzugsweise weisen die erfindungsgemäßen Zusammensetzungen PVC oder Homo- oder Copolymere auf Basis von Ethylen, Propylen, Butadien, Vinylacetat, Glycidylacrylat, Glycidylmethacrylat, Methacrylaten, Acrylaten, Acrylaten oder Methacrylaten mit am Sauerstoffatom der Estergruppe gebundenen Alkylresten von verzweigten oder unverzweigten Alkoholen mit einem bis zehn Kohlenstoffatome(n), Styrol, Acrylnitril oder cyclischen Olefinen auf.

Besonders bevorzugt weisen die erfindungsgemäßen Zusammensetzungen PVC und/ oder Polyacrylate auf. Bevorzugt handelt es sich um Suspensions-, Masse-, Mikrosuspensions- oder Emulsions-PVC.

Substanzen gemäß Formel Ia oder Ib eignen sich für PVC-Produktionsverfahren wie Extrusion, Kalandrieren, Spritzgießen, Rotationsformen oder Streichen.

Der Anteil am Weichmacher in den Zusammensetzungen beträgt typischerweise zwischen 0,5 bis 99,5 Gew.%, bevorzugt 5 bis 50 %.

Die Zusammensetzung kann neben den Weichmachern weitere Bestandteile enthalten. Hierzu zählen weitere Weichmacher, Füllstoffe, Pigmente, Stabilisatoren, Co-Stabilisatoren (wie beispielsweise epoxidiertes Sojabohnenöl), Gleitmittel, Treibmittel, Antioxidantien, Flammschutzmittel, Lichtstabilisatoren, Kicker, polymere Verarbeitungshilfsmittel, Schlagzähverbesserer, optische Aufheller, Antistatika, Biostabilisatoren oder antimikrobielle Wirkstoffe.

Die Weichmacher und Zusammensetzungen können in Kunststoffzusammensetzungen, Klebstoffen, Dichtungsmassen, Lacken, Farben, Gummis, Plastisolen, Textilien, Befilmungsüberzügen oder Tinten oder zu deren Herstellung verwendet werden.

Ein weiterer Gegenstand der vorliegenden Erfindung ist daher die Verwendung in einer Zusammensetzung wie zuvor definiert, dadurch gekennzeichnet, dass es sich bei der Zusammensetzung um eine Kunststoffzusammensetzung, einen Klebstoff, eine Dichtungsmasse, einen Lacke, eine Farbe, einen Gummi, ein Plastisol, Textilien, einen Befilmungsüberzug oder eine Tinte handelt.

Aus den Weichmachern hergestellte Kunststoffprodukte können beispielsweise sein: Profile, Dichtungen, Lebensmittelverpackungen, Folien, Spielzeug, Medizinartikel, Dachbahnen, Kunstleder, Fußbodenbeläge, Unterbodenschutz, beschichtete Gewebe, Tapeten, Kabel und Drahtummantelungen.

Besonders geeignet ist die Verwendung der Weichmacher in Zusammensetzungen, die in engem meschlichen Kontakt zur Anwendung kommen. Dazu zählen z.B. medizinische Anwendungen wie z.B. Blutbeutel, Atemmasken, Katheter, Beatmungsschläuche, Schläuche für enterale Ernährung und Hämodialyse, Handschuhe, Lebensmittelverpackungen wie z.B. künstliche Weinkorken, Kronkorken, Verschlußkappen, Deckeldichtungen, Schläuche, Frischhaltefolie, Innenraumanwendungen wie z.B. Fußböden und Tapeten, Spielzeug und Kinderpflegeartikel wie z.B. Puppen, aufblasbares Spielzeug wie Bälle, Spielfiguren, Knete, Schwimmhilfen, Kinderwagen-Abdeckhauben, Sport- und Freizeitprodukte wie z.B. Gymnastikbälle, Übungsmatten, Sitzkissen, Massagebälle, Schuhe oder Bälle.

Ein mögliches Verfahren zur Herstellung einer Zusammensetzung wie zuvor definiert, ist dadurch gekennzeichnet, dass der Weichmacher, wie zuvor definiert, mit dem Polymer und den gegebenenfalls weiteren Komponenten vermischt wird. Dies kann nach dem Fachmann bekannten Verfahren erfolgen.

Verfahren zur Herstellung von weichgemachtem Polyvinylchlorid sind bekannt, beispielsweise aus L. Meier: "Weichmacher", in Gächter/Müller (Herausgeber) Kunststoffadditive, 3. Ausgabe, S. 350 bis S. 367, Hanser Verlag 1989/1990. Die Weichmacher können in diesem Verfahren in Form einer zuvor hergestellten Weichmacherzubereitung oder auch unabhängig voneinander in beliebiger Weise eingesetzt werden.

Für die Herstellung von weichgemachten Kunststoffen, insbesondere von weichgemachtem PVC, wird beispielsweise in einem ersten Schritt PVC, insbesondere Emulsions- und Microsuspensions-PVC, bei 10 bis 60 °C mit der erfindungsgemäßen Weichmacherzubereitung und ggf. weiteren Hilf- und Zusatzstoffen vermischt. In einem zweiten Schritte wird dieses Plastisol in Form gebracht und bei Temperaturen von 140 bis 200°C zum Endartikel verarbeitet.

Bevorzugt ist die Verwendung mindestens einer Verbindung der Formel Ia oder Ib in Kunststoffzusammensetzungen, Klebstoffen, Dichtungsmassen, Lacken, Farben, Gummis, Plastisolen, Textilien, Befilmungsüberzügen und/ oder Tinten, wie oben erläutert.

Im Folgenden wird die Erfindung anhand von Beispielen näher erläutert. Die Erfindung ist im gesamten beanspruchten Bereich ausführbar und nicht auf die hier genannten Beispiele beschränkt.

### Beispiele:

### Beispiel 1: Synthese von 2-Hydroxy-cyclohexanecarboxylic acid 2-ethyl-hexyl ester (Substanz I-9)

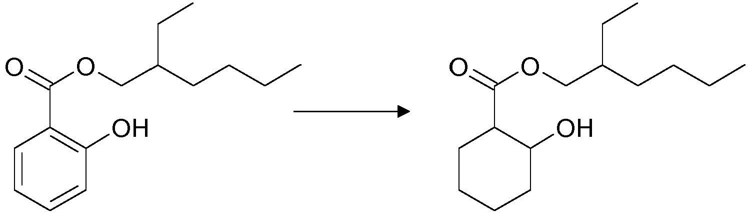

50g 2-Hydroxy-benzoic acid 2-ethylhexylester (Eusolex® OS) werden in 318mL 2-Propanol gelöst. Anschließend werden 5g Katalysator Rh-C-5% (53,6% Wasser) zugegeben. Die Hydrierung erfolgt mit Wasserstoff 3.0 bei 65°C und 5bar Druck. Nach vollständiger Hydrierung wird der Katalysator durch Filtration abgetrennt. Das Filtrat wird im Vakuum vom Lösungsmittel befreit und über einen Spritzenfilter (0,2µm) filtriert. Man erhält das analysenreine Produkt als farbloses Öl im Gemisch von cis- und trans-Isomeren im Verhältnis von ca. 5/1.

### Beispiel 2: Synthese von 2-Hydroxy-cyclohexanecarboxylic acid 3,3,5-trimethyl-cyclohexyl ester (Substanz I-10)

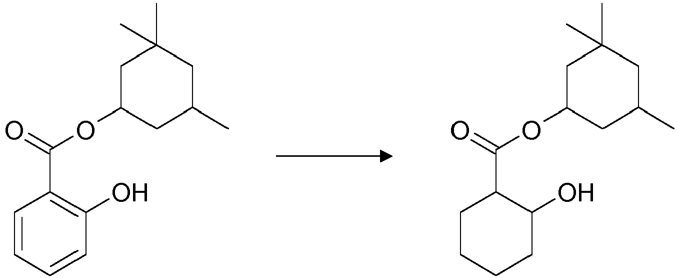

50g 3,3,5-trimethyl-cyclohexyl ester (Eusolex® HMS) werden in 318mL 2-Propanol gelöst. Anschließend werden 5g Katalysator Rh-C-5% (53,6% Wasser) zugegeben. Die Hydrierung erfolgt mit Wasserstoff 3.0 bei 80°C und 5bar Druck. Nach vollständiger Hydrierung wird der Katalysator durch Filtration abgetrennt. Das Filtrat wird über Seitzfilter (a) 0.5µm, anschließend b) 0,2µm) filtriert. Das Filtrat wird im Vakuum vom Lösungsmittel befreit. Man erhält analysenreines Produkt als farbloses Öl im Gemisch von cis- und trans-Isomeren im Verhältnis von ca. 5/1.

### Beispiel 3: Synthese von 4-Hydroxy-cyclohexanecarboxylic acid butyl ester (Substanz I-20)

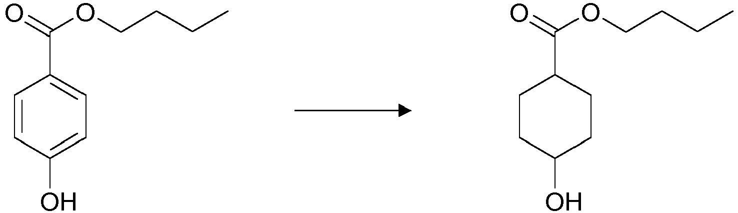

30g 4-Hydroxy-benzoic acid butylyl ester werden in 100mL Tetrahydrofuran gelöst. Anschließend werden 3,0g Katalysator Rh-C-5% (ca. 50% Wasser) zugegeben. Die Hydrierung erfolgt mit Wasserstoff 3.0 bei 65°C und 5bar. Nach vollständiger Hydrierung wird der Katalysator durch Filtration abgetrennt. Das Filtrat wird im Vakuum vom Lösungsmittel befreit. Man erhält analysenreines Produkt als farbloses Öl im Gemisch von cis- und trans-Isomeren von ca. 5/2.

### Beispiel 4: Nachweis der Schnellgeliereigenschaften

Bei Raumtemperatur werden je 2g Polyvinylchlorid (PVC) Polymer (Vestolit B 7021) mit 48g Weichmacher gemischt. Man heizt die Mischung unter ständigem Rühren langsam auf, bis sich das PVC Polymer auflöst. Man registriert die Temperatur, bei der sich das Polymer im Weichmacher gelöst hat (= Lösungstemparatur). Als Standardweichmacher wird DEHP (Bis(2-ethylhexyl)-phthalat) betrachtet. Liegt die Lösungstemperatur eines Weichmachers unterhalb von DEHP, so bezeichnet man diesen Weichmacher als Schnellgelierer. Zudem wird mit einem bereits bekannten Cyclohexylderivat verglichen (Cyclohexane-1,2-dicarboxylic acid bis-(7-methyl-octyl) ester [Hexannoll® DINCH®]).

| Testsubstanz | PVC Lösungstemperatur |
|---|---|
| DEHP (Standardvergleich) | 112 [°C] |
| DINCH (Vergleich) | 132 [°C] |
| 2-Hydroxy-cyclohexanecarboxylic acid 2-ethyl-hexyl ester (I-9) | 108 [°C] |
| 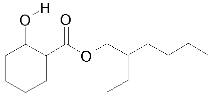 | |
| 2-Hydroxy-cyclohexanecarboxylic acid 3,3,5-trimethyl-cyclohexyl ester (I-10) | 110 [°C] |
| 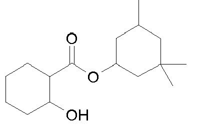 | |

### Beispiel 5: Wirkung als Sekundärweichmacher

Bei Raumtemperatur werden je 2g Polyvinylchlorid (PVC) Polymer (Vestolit B 7021) mit 48g einer Kombination aus 80% Primärweichmacher Cyclohexane-1,2-dicarboxylic acid bis-(7-methyl-octyl) ester (Hexannoll® DINCH®) und 20% Sekundärweichmacher 4-Hydroxy-cyclohexanecarboxylic acid butyl ester (I-20) vermengt. Man heizt die Mischung unter ständigem Rühren langsam auf, bis sich das PVC Polymer auflöst. Man registriert die Temperatur, bei der sich das Polymer gelöst hat (= Lösungstemparatur).

| Testsubstanz | PVC Lösungstemperatur |
|---|---|
| DINCH (Vergleich) | 132 [°C] |
| 4-Hydroxy-cyclohexanecarboxylic acid butyl ester (I-20) | 125 [°C] |
| 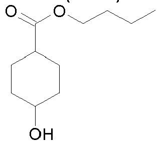 | |

### Beispiel 6: Plastisole

| | Plastisol 1 | Plastisol 2 | Plastisol 3 | Plastisol 4 | Plastisol 5 |
|---|---|---|---|---|---|
| PVC (Vestolit B 7021, Fa. Vestolit) | 100g | 100g | 100g | 100g | 100g |
| Di-iso-nonylphthalat (Vestinol 9, Fa. Evonik) | 30g | | 30g | | 30g |
| 1,2-Diisononylcyclohexanedicarboxylic acid ester | | 20g | | 20g | |
| Di-n-pentylterephthalat | 10g | | 10g | | 10g |
| 1,4-Dipentylcyclohexanedicarboxylic acid ester | | 10g | | 10g | |
| **Substanz I-9** | 10g | 20g | 10g | 20g | 10g |
| Epoxidiertes Sojabohnenöl | 3g | 3g | 3g | 3g | 3g |
| Mark CZ 140 (Ca/Zn-Stab., Crompton) | 1,5g | 1,5g | 1,5g | 1,5g | 1,5g |

| Plastisol | Plastisol 6 | Plastisol 7 | Plastisol 8 | Plastisol 9 | Plastisol 10 |
|---|---|---|---|---|---|
| PVC (Vestolit B 7021, Fa. Vestolit) | 100g | 100g | 100g | 100g | 100g |
| Di-iso-nonylphthalat (Vestinol 9, Fa. Evonik) | 30g | | 30g | | 30g |
| 1,2-Diisononylcyclohexanedicarboxylic acid ester | | 20g | | 20g | |
| Di-n-pentylterephthalat | 10g | | 10g | | 10g |
| 1,4-Dipentylcyclohexanedicarboxylic acid ester | | 10g | | 10g | |
| **Substanz I-10** | 10g | 15g | 10g | 15g | 10g |
| **Substanz I-20** | | 5g | | 5g | |
| Epoxidiertes Sojabohnenöl | 3g | 3g | 3g | 3g | 3g |
| Mark CZ 140 (Ca/Zn-Stab., Crompton) | 1,5g | 1,5g | 1,5g | 1,5g | 1,5g |

## Patentansprüche

1. Verwendung mindestens einer Verbindung der Formel Ia oder Ib 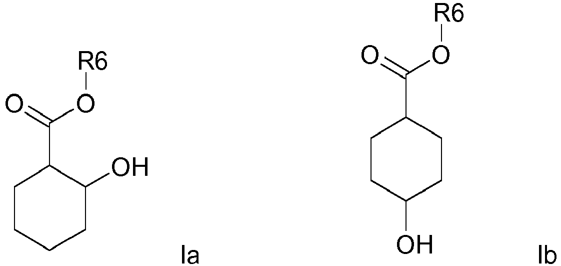 worin R6 steht für einen Rest ausgewählt aus
- H,
- (CR7H-CR8H-O)ₙCR9H-CR10H-OH, mit n= 0 bis 20,
- geradkettige oder verzweigten Alkylgruppe mit 1 bis 20 C-Atomen,
- geradkettige oder verzweigte Alkenyl- oder Alkinylgruppe mit 2 bis 20 C-Atomen und einer oder mehreren Doppel- bzw. Dreifachbindungen,
wobei die Alkyl-, Alkenyl- oder Alkinylgruppe optional eine oder mehrere Cyclohexyl- oder Arylgruppen enthalten kann,
worin R7, R8, R9 und R10 unabhängig voneinander stehen für H, Methyl oder Ethyl,
als Weichmacher.

2. Verwendung nach Anspruch 1, **dadurch gekennzeichnet, dass** die Verbindung der Formel Ia oder Ib ausgewählt ist aus den Verbindungen der Formel I-1 bis I-28
| | | | |
|---|---|---|---|
| I-1 | 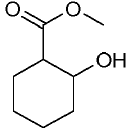 | I-2 | 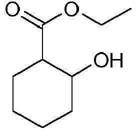 |
| I-3 | 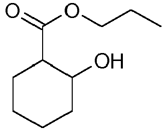 | I-4 | 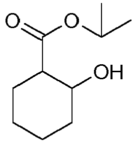 |
| I-5 | 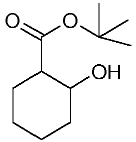 | I-6 | 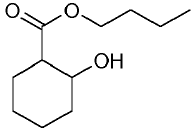 |
| I-7 | 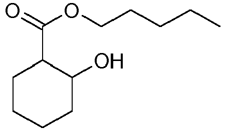 | I-8 | 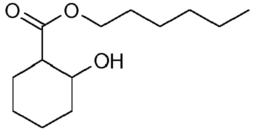 |
| I-9 | 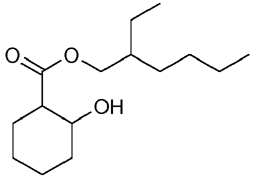 | I-10 | 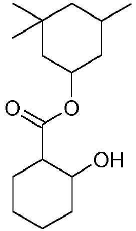 |
| I-11 | 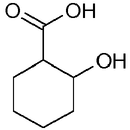 | I-12 | 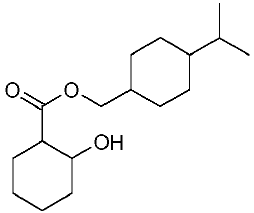 |
| I-13 | 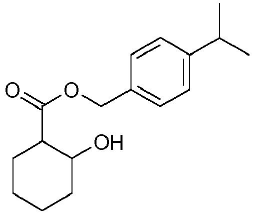 | I-14 | 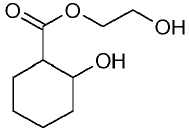 |
| I-15 | 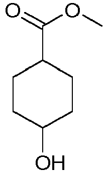 | I-16 | 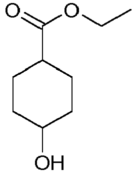 |
| I-17 | 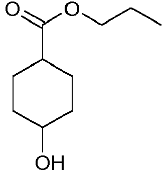 | I-18 | 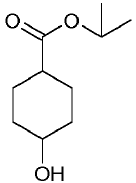 |
| I-19 | 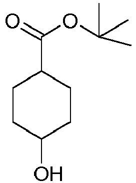 | I-20 | 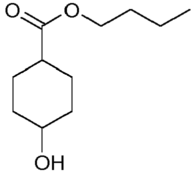 |
| I-21 | 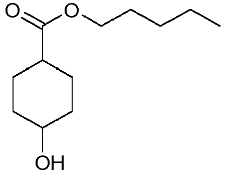 | I-22 | 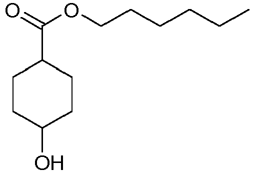 |
| I-23 | 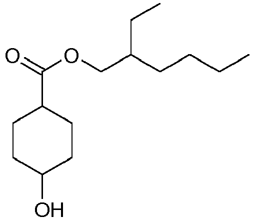 | I-24 | 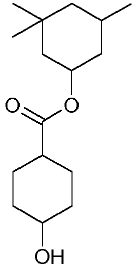 |
| I-25 | 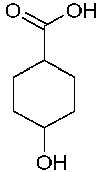 | I-26 | 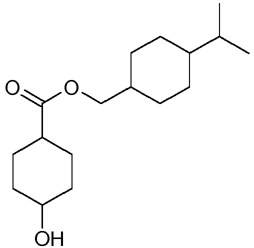 |
| I-27 | 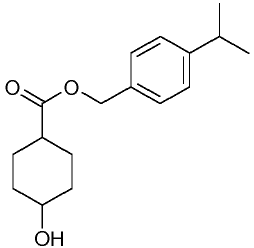 | I-28 | 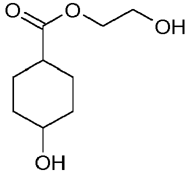 |

3. Verwendung nach Anspruch 2, **dadurch gekennzeichnet, dass** die Verbindung der Formel Ia oder Ib ausgewählt ist aus den Verbindungen der Formel I-9, I-10 und I-20.

4. Verwendung gemäß einem oder mehreren der Ansprüche 1 bis 3 in einer Zusammensetzung, die neben der mindestens einen Verbindung der Formel Ia oder Ib ein Polymer enthält.

5. Verwendung nach Anspruch 4, **dadurch gekennzeichnet, dass** der Anteil an Weichmacher 0,5 bis 99,5 Gew.%, bezogen auf die gesamte Zusammensetzung, beträgt.

6. Verwendung nach Anspruch 4 oder 5, **dadurch gekennzeichnet, dass** die Zusammensetzung weitere Weichmacher, Füllstoffe, Pigmente, Stabilisatoren, Co-Stabilisatoren (wie beispielsweise epoxidiertes Sojabohnenöl), Gleitmittel, Treibmittel, Antioxidantien, Flammschutzmittel, Lichtstabilisatoren, Kicker, polymere Verarbeitungshilfsmittel, Schlagzähverbesserer, optische Aufheller, Antistatika, Biostabilisatoren oder antimikrobielle Wirkstoffe enthält.

7. Verwendung nach einem oder mehreren der Ansprüche 4 bis 6, **dadurch gekennzeichnet, dass** es sich bei der Zusammensetzung um eine Kunststoffzusammensetzung, einen Klebstoff, eine Dichtungsmasse, einen Lack, eine Farbe, einen Gummi, ein Plastisol, Textilien, einen Befilmungsüberzug oder eine Tinte handelt.

## Claims

1. Use of at least one compound of the formula Ia or Ib 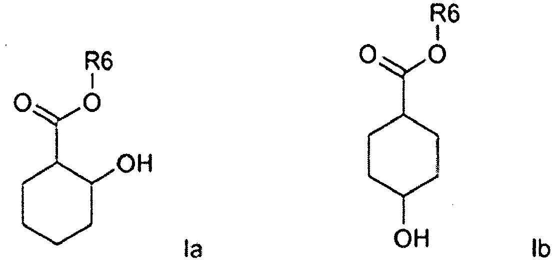 in which R6 stands for a radical selected from
- H,
- (CR7H-CR8H-O)ₙCR9H-CR10H-OH, where n=0 to 20,
- straight-chain or branched alkyl group having 1 to 20 C atoms,
- straight-chain or branched alkenyl or alkynyl group having 2 to 20 C atoms and one or more double or triple bonds,
where the alkyl, alkenyl or alkynyl group may also contain one or more cyclohexyl or aryl groups,
in which R7, R8, R9 and R10 stand, idependently of one another, for H, methyl or ethyl,
as plasticizer.

2. Use according to claim 1, **characterised in that** the compound of the formula Ia or Ib is selected from the compounds of the formulae 1-1 to 1-28
| | | | |
|---|---|---|---|
| I-1 | 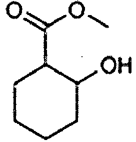 | I-2 | 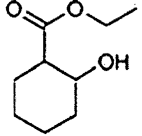 |
| I-3 | 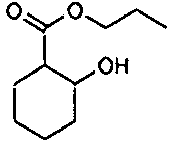 | I-4 | 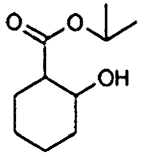 |
| I-5 | 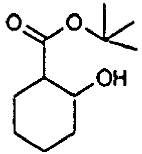 | I-6 | 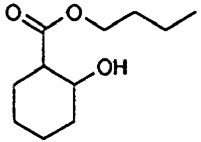 |
| I-7 | 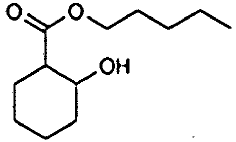 | I-8 | 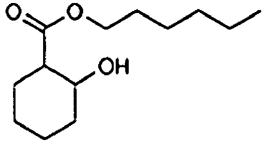 |
| I-9 | 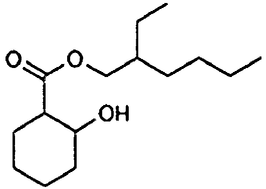 | I-10 | 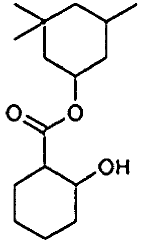 |
| I-11 | 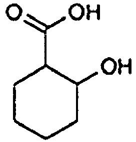 | 1-12 | 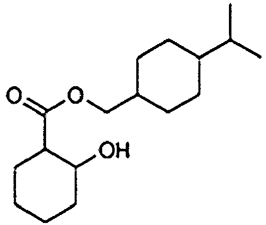 |
| I-13 | 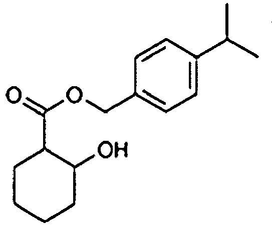 | I-14 | 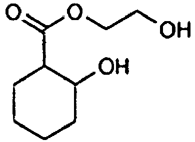 |
| I-15 | 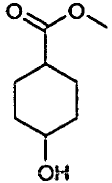 | I-16 | 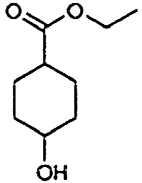 |
| I-17 | 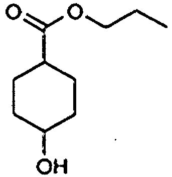 | I-18 | 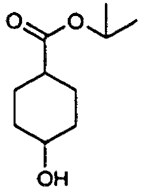 |
| I-19 | 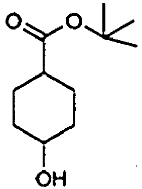 | I-20 | 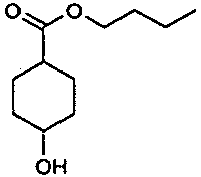 |
| I-21 | 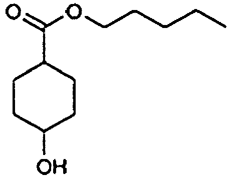 | I-22 | 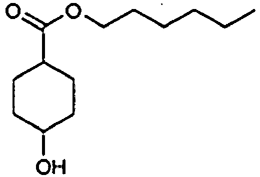 |
| I-23 | 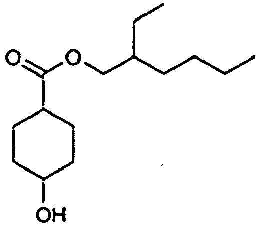 | I-24 | 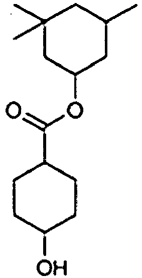 |
| I-25 | 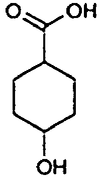 | I-26 | 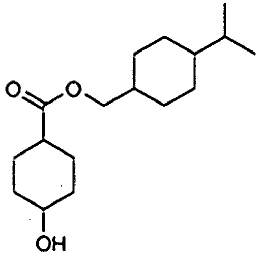 |
| I-27 | 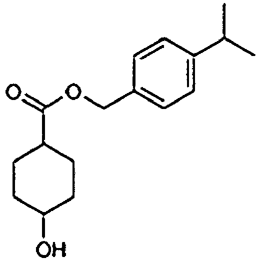 | I-28 | 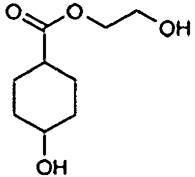 |

3. Use according to claim 2, **characterised in that** the compound of formula la or Ib is selected from the compounds of the formulae 1-9, 1-10 and 1-20.

4. Use according to one or more of claims 1 to 3 in a preparation comprising at least one compound of the formula Ia or Ib and a polymer.

5. Use according to claim 4 **characterised in that** the plasticizer is present in an amount of 0.5 to 99.5% by weight, based on the total amount of the preparation.

6. Use according to claim 4 or 5 **characterised in that** the preparation contains further plasticizers, fillers, pigments, stabilizers, co-stabilizers (such as epoxidized soybean oil), lubricants, propellants, antioxidants, flame retardants, light stabilizers, a kicker, polymeric processing aids, impact modifiers, optical brighteners, antistatic agents, biostabilizers or antimicrobial agents.

7. Use according to one or more of the claims 4 bis 6 **characterised in that** the preparation is a plastic composition, an adhesive, a sealing compound, a lacquer, a paint, a rubber, a plastisol, a textile, a film coating, or an ink.

## Revendications

1. Utilisation d'au moins un composé de formule Ia ou Ib 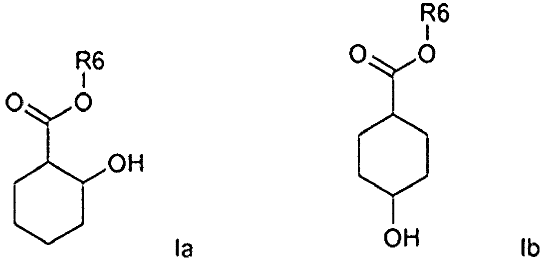 dans lequel R6 représente un radical choisi parmi
- H,
- (CR7H-CR8H-O)ₙCR9H-CR10H-OH, où n=0 à 20,
- un groupement alkyle à chaîne linéaire ou ramifiée ayant de 1 à 20 atomes de C,
- un groupement alcényle ou alcynyle à chaîne linéaire ou ramifiée ayant de 2 à 20 atomes de C et une ou plusieurs doubles ou triples liaisons,
où le groupement alkyle, alcényle ou alcynyle peut également contenir un ou plusieurs groupements cyclohexyle ou aryle,
dans lequel R7, R8, R9 et R10 représentent, idépendamment les uns des autres, H, méthyle ou éthyle,
comme plastifiant.

2. Utilisation selon la revendication 1, **caractérisée en ce que** le composé de formule Ia ou Ib est choisi parmi les composés de formules 1-1 à 1-28
| | | | |
|---|---|---|---|
| I-1 | 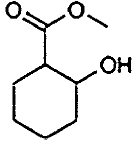 | I-2 | 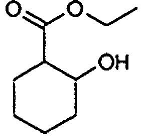 |
| I-3 | 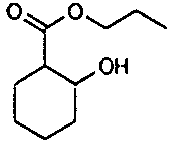 | I-4 | 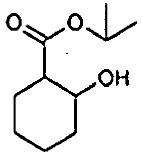 |
| I-5 | 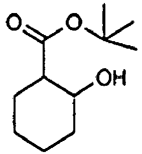 | I-6 | 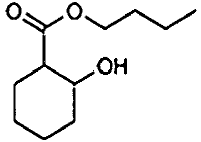 |
| I-7 | 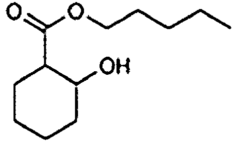 | I-8 | 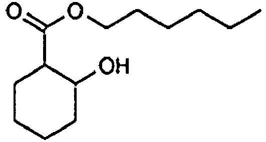 |
| I-9 | 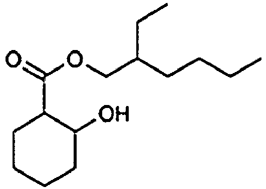 | I-10 | 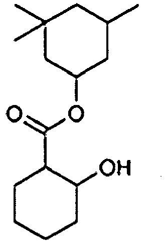 |
| I-11 | 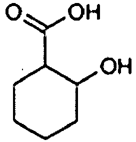 | I-12 | 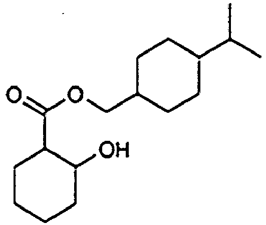 |
| I-13 | 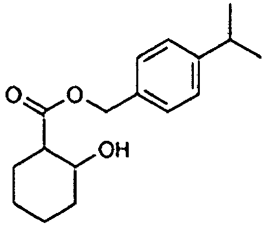 | I-14 | 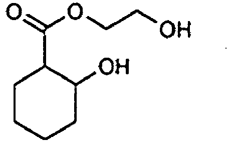 |
| I-15 | 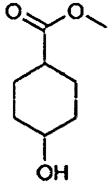 | I-16 | 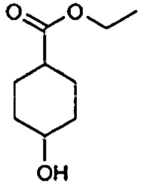 |
| I-17 | 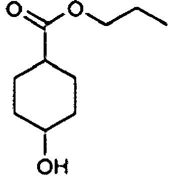 | I-18 | 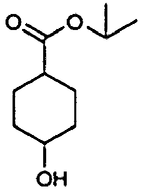 |
| I-19 | 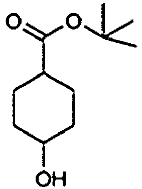 | I-20 | 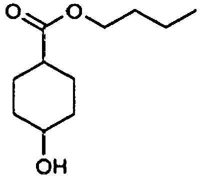 |
| I-21 | 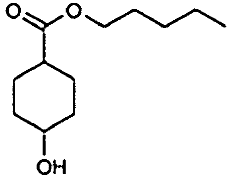 | I-22 | 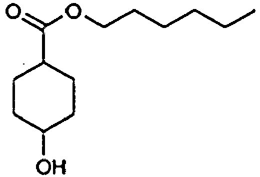 |
| I-23 | 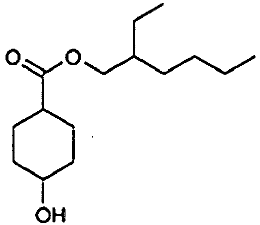 | I-24 | 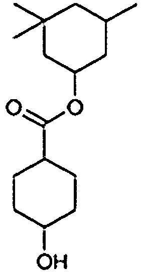 |
| I-25 | 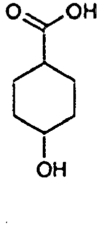 | I-26 | 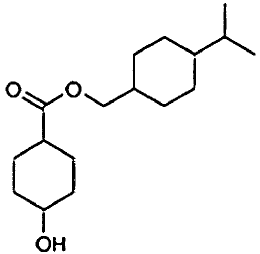 |
| I-27 | 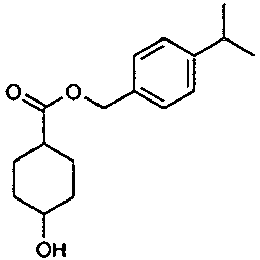 | I-28 | 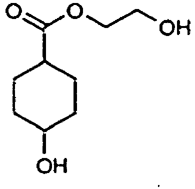 |

3. Utilisation selon la revendication 2, **caractérisée en ce que** le composé de formule Ia ou Ib est choisi parmi les composés de formules 1-9, 1-10 et 1-20.

4. Utilisation selon une ou plusieurs des revendications 1 à 3 dans une préparation comprenant au moins un composé de formule Ia ou Ib et un polymère.

5. Utilisation selon la revendication 4, **caractérisée en ce que** le plastifiant est présent en une quantité de 0,5 à 99,5% en poids, par rapport à la quantité totale de la préparation.

6. Utilisation selon la revendication 4 ou 5, **caractérisée en ce que** la préparation contient d'autres plastifiants, charges, pigments, stabilisants, co-stabilisants (tels que de l'huile de soja époxydée), lubrifiants, agents propulseurs, antioxydants, retardateurs de flamme, stabilisants de lumière, des agents des kickers, des agents de traitement polymères, des agents modifiant l'impact, des agents de blanchiment optiques, des agents antistatiques, des agents biostabilisateurs ou antimicrobiens.

7. Utilisation selon une ou plusieurs des revendications 4 à 6, **caractérisée en ce que** la préparation est une composition plastique, un adhésif, un composé d'étanchéité, une laque, une peinture, un caoutchouc, un plastisol, un textile, un film de revêtement ou une encre.
